Europäisches Patentamt

European Patent Office

Office européen des brevets

(19)

(11) Numéro de publication: **0 229 001**
**A1**

## DEMANDE DE BREVET EUROPEEN

(21) Numéro de dépôt: **86830004.7**

(22) Date de dépôt: **08.01.86**

(51) Int. Cl.⁴: **F 03 D 3/00**
F 03 D 9/00

(43) Date de publication de la demande:
**15.07.87  Bulletin  87/29**

(84) Etats contractants désignés:
**AT BE CH DE FR GB IT LI LU NL SE**

(71) Demandeur: **Martines, Ettore Valentino**
**Via Lombardia 31**
**I-73013 Galatina (LE)  (IT)**

(72) Inventeur: **Martines, Ettore Valentino**
**Via Lombardia 31**
**I-73013 Galatina (LE)  (IT)**

(54) **Eolienne à axe vertical transformant l'énergie du vent en chaleur.**

(57)  L'invention appartient à la branche de la technique relative à l'utilisation d'énergie alternative et en particulier d'énergie éolienne. Avec cette invention on a la possibilité d'exploiter la poussée du vent au maximum du rendiment et en manière très pratique, simple et économique.

En outre il en résulte qu'on a la possibilité de transformer directement l'énergie éolienne en énergie électrique d'intensité constante et donc d'obtenir de la chaleur au moyen de résistances électriques normales.

Le demandeur indique pour la publication l'unique dessin n -1-.

EP 0 229 001 A1

## Description

"Appareil actionné par le vent utilisable pour l'obtention d'énergie mécanique de puissance variable proportionnée à différentes vitesses du vent, apte à être transformée en énergie électrique en quantité variable mais d'intensité constante et directement utilisable pour le chauffage des locaux à usage d'habitation ou de travail et pour tout autre type d'usage"

L'invention pour laquelle on demande l'obtention du brevet européen fait partie de la technique relative à l'utilisation de l'énergie éolienne en tant qu'énergie alternative.

L'invention consiste dans la construction d'un appareil qui. tout en présentant des données techniques d'une extrême simplicité et des dimensions d'encombrement très reduites, permet d'exploiter au maximum l'énergie éolienne. En outre,l'appareil, tel qu'il est agencé, permet d'obtenir des quantités d'énergie électrique proportionnées à différentes vitesses du vent transformables en chaleur pour le chauffage des locaux à usage d'habitation ou de travail et pour tout autre type d'usage.

Il est composé de très peu d'éléments et il consent d'obtenir l'exploitation au maximum de l'énergie éolienne avec plus de praticité et d'économie.

Actuellement le demandeur du brevet n'est pas à même de connaître le tout dernier état de la technique.

Il va sans dire qu'il faut disposer d'un accumulateur de chaleur pour avoir une réserve de masse liquide réchauffée et pour avoir la plus grande disponibilité possible de chaleur. (d'ordinaire un réservoir d'eau convenablement isolé pour éviter la dispersion de la chaleur et ayant une capacité suffisante à fournir le nombre des calories nécessaires.) En outre la capacité de l'accumulateur de chaleur doit être prévue en faisant cas du nombre des jours d'autonomie dont on veut disposer au cas qu'il n'y ait pas de vent pour une certaine période. Selon les vitesses les plus fréquentes du vent qui souffle dans la zone on peut préétablir les dimensions de l'appareil et, enfin, celles de l'accumulateur de chaleur.

De cette façon on peut venir à disposer d'une grande masse de liquide dont la température rapproche à cent dégrés et qui peut donc être utilisée pour le chauffage quand on veut obtenir de la chaleur à une température qui ne depasse pas cent degrés.

L'appareil peut être réalisé avec une facilité extrême et il présente des mésures d'encombrément très reduites par rapport aux autres appareils ayant le même but.

En outre, il a la roue actionnée par le vent étudiée et expérimentée pour exploiter au maximum la poussée du vent.

L'une des données saillantes de l'appareil c'est sa possibilité d'exploiter automatiquement l'énergie mécanique atteinte à cause de la poussée du vent selon différentes vitesses, ce qui permet d'obtenir de la quantité variable d'énergie électrique mais d'intensité constante (ou presque) avec l'emploi de deux ou bien plusieurs géneratrices d'électricité (alternateurs).

Il va sans dire que l'obtention de la chaleur est assûrée tout simplement à travers l'utilisation de resistances électriques communes.

L'appareil peut être facilement installé n'importe où à condition qu'il n'y ait pas d'obstacles qui puissent empêcher ou diminuer la poussée du vent. En outre, il n'a pas besoin d'un particulier entretien et il fournit de l'énergie complètement gratuite.

En effet l'appareil se compose des éléments suivants:

1°) Un plancher disposé horizontalement et soutenant un châssis métallique ayant la forme du tronc de pyramide qu'on peut construire simplement comme mieux on croit.

2°) Un goujon métallique vertical qui se repose sur le plancher au moyen d'un palier préférablement conique.

Le goujon peut être réalisé utilisant un tube métallique de diamètre ed d'épaisseur proportionnés aux efforts de torsion et de flexion qu'il doit supporter.

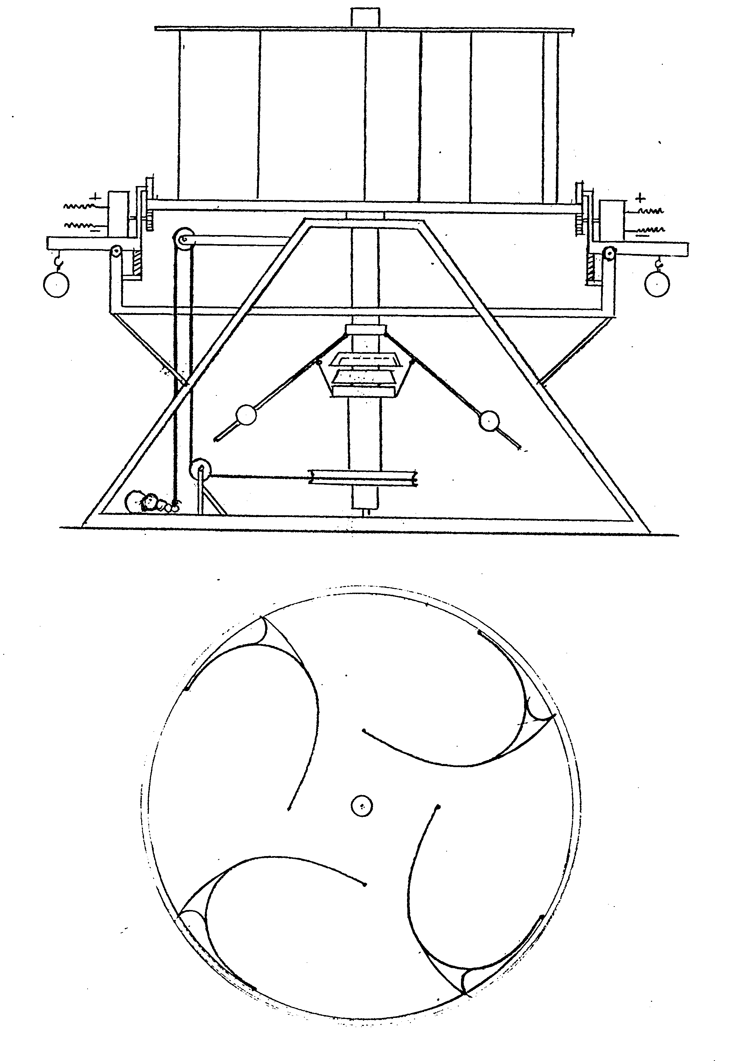

3°) Une roue éolienne actionable par le vent et ayant son son mouvement rotatoire autour d'un axe vertical et montée sur le goujon vertical décrit au précèdent n° 2°); celle-ci est composée de deux disques coaxiaux parallèles au dedans desquels sont agencés verticalement quelques panneaux opportunément façonnés; dans son ensemble elle a la forme approximativément comparable à une turbine. (Voir section horizontal en bas du dessin n° -1-).

Une couronne dentée (ou bien une chaîne similaire à celles qu'on applique aux motorcycles) fixée, moyennant un anneau métallique, au bord extérieur du disque inferieur de la roue éolienne. Par conséquent la roue éolienne assume aussi la fonction de roue motrice. Ce système permet d'éliminer tout engrenage intermédiaire avec les considérablees résiastances passives qui en deriveraient. En effet elle s'engrène directement avec les petites roues dentées assemblées sur les petits axes des altenateurs.

5°) Le possible emploi de plusieurs générateurs d'électricité (alternateurs) ayant, autant que possible, un bas régime de tours. Il est indispensable d'employer les alternateurs et non les communes dinamos car celles-ci exercent un effet freinant dejà au debut de la rotation. Comme chaque alternateur doit fonctionner pour son propre compte selon la vitesse du vent (aussi simultanément), les rapports de transmission doivent être calculés de façon que chaque alternateur réalise un nombre de tours à la minute légèrement inférieur à ceux de l'alternateur rangé dans la suite pour son entrée en action.

De cette façon on obtient que peu après le commencement de l'action du vent et au fur et à mesure que sa vitesse aura atteint une valeur detérminée, l'alternateur qui est doté du plus grand nombre de tours à la minute commencera à débiter une certaine quantité de courant électrique. Celui-ci continuera à prendre de la valeur à mesure que la vitesse du vent fera augmenter le nombre des tours sans toutefois atteindre le maximum admis pour l'alternateur même.

Depuis ce moment, n'importe quelle augmentation de vitesse fait entrer aussi en action un autre alternateur doté d'un nombre de tours à la minute légèrement inférieur à celui du précédent. Cet alternateur fonctionne parce que la légère augmentation du nombre des tours permet qu'il entre en excitation et donc qu'il débite du courant électrique pour son propre compte.

Dans cette phase, si la vitesse du vent est suffisante, le deuxième alternateur continuera à débiter du courant électrique. Au cas contraire, la force freinante qui s'est développée initialement dans le deuxième alternateur (Loi de Lenz) fera renvenir le nombre du premier alternateur à la valeur qu'il avait précédemment avant l'entrée en action du deuxième.

Le même raisonnement vaut si la vitesse du vent atteint une valeur suffisante à faire entrer en action un troisième alternateur, et ainsi de suite.

De cette façon chaque alternateur, pour son compte et en proportion de la vitesse du vent, débitera de l'énergie electrique d'intensité constante ou presque.

L'emploi simultané de plusieurs alternateurs ayant différentes puissances donne aussi l'avantage qu'ils débitent beaucoup plus de courant électrique étant à même de exploiter une puissance mécanique qui est proportionelle au carré de la vitesse du vent.

6°) Mécanisme limiteur de la vitesse rotatoire de la roue éolienne.

Il est constitué du mécanisme rotatoire expansible fixé à l'axe de la roue éolienne en un trait intermédiaire entre la même roue éolienne et le plancher de l'appareil.

D'une bague fixée à l'axe se partent deux ou plusieurs hampes, chacune desquelles soutient une sphère métallique. Ces hampes sont jiointes à la bague moyennant des charnières. Pendant le mouvement rotatoire les sphères métalliques tendent à s'eloigner de l'axe central à cause de la force centrifuge. Les hampes, moyennant des trigles, sont obligées à élever une bague libre de tourner autour d'un tronçon de tube cylindrique coaxial avec l'axe de la roue éolienne. Aussi le tronçon de tube cylindrique peut tourner autour de l'axe de la roue éolienne et se deranger verticalement.

La bague susdite et le tronçon de tube cylindrique tournent moyennant des paliers à roulement.

Quand la bague est obligée de s'élever pendant la rotation des hampes soutenant les sphères métalliques, elle soulève en même temps le cylindre sur lequel elle est montée. Ce cylindre est solidaire avec un disque de friction monté vers son extrêmité superieure et avec une poulie montée vers son extrêmité inférieure. Les poids et les distances des sphères métalliques des charnières devraient être réglés de façon que le disque de friction solidaire avec le tronçon de tube cylindrique soit très près du disque de friction solidaire avec l'axe de la roue éolienne quand la vitesse de rotation a dejà atteint le maximum (ou presque) du dernier alternateur. Si la vitesse dépasse la valeur susdite a lieu l'embrayage et la poulie est obligée de rouler faisant enrouler un câble. Celui-ci agit comme frein à action graduée soulevant graduellement les poids attelés à son extrêmité et reposant sur le plancher.

7°) Un mécanisme pour le parfait engrènement de la couronne dentée avec les petites roues dentées des alternateurs.

L'épaisseur du bord de la couronne dentée est comprise presque exactement entre les petites roues dentées sous-jacentes et les paliers à roulement situés au-dessus. La distance entre les axes des petites roues dentées et ceux des paliers à roulement est invariable. De cette façon les ailes de la couronne dentée ne peuvent jamais perdre le contact avec les ailes des petites roues dentées si la même couronne dentée a quelques defauts de planéité. (Voir la figure en haut du dessin n° -1-).

Mais dans ce cas, comme il pourrait se produire de considérables résistances passives, on remedie a l'inconvénient au moyen de l'équilibrage des supports flottants sur lesquels sont assemblés les alternateurs et chaque accessoire. (Voir la figure en haut du dessin n° -1-).

## Revendications

Les revendications concernent essentiellement l'appareil dans son ensemble caracterisé de quelques données techniques principales, c'est-à-dire:

(1°) Une roue éolienne actionable par le vent et ayant son mouvement rotatoire autour d'un axe vertical et montée sur un goujon vertical qui se repose sur un plancher horizontal au moyen d'un palier préférablement conique. Le plancher soutient un châssis métallique ayant la forme du tronc de pyramide. La roue éolienne dans l'ensemble a une forme comparable approximativement à une turbine.

Quelle que soit la direction du vent, la roue éolienne tourne toujours dans le même sens. Elle est composée de deux disques coaxiaux parallèles au dedans desquels sont agencés verticalement quelques panneaux opportunément façonnés et agencés pour obtenir l'exploitation au maximum de la poussée du vent.(Voir la section horizontale dans la figure en bas du dessin n° -1-). De la sorte on reduit au minimum le moment negatif produit par le vent lorsqu'il frappe les parties convexes des panneaux et on obtient le moment positif maximum lorsque le vent frappe les parties concaves.

La roue éolienne a aussi la fonction d'une roue motrice en entransmettant directement le mouvement rotatoire aux petites roues dentées appliquées aux axes des alternateurs.

De cette façon il en resulte qu'on élimine chaque engrenage intermédiaire et les considérables resistances passives qui en dériveraient.

Pour obtenir un tel effet, là où a lieu la circonférence maximum du disque inférieur de la roue éolienne, on applique une couronne dentée (ou bien une chaîne similaire à celles qu'on s'applique aux motocycles) moyennant un anneau métallique.

2) Le possible emploi contemporain de plusieurs génératrices d'électricité (alternateurs) débitant énergie chacune pour son propre compte et proportionellement au carré de de la vitesse du vent.

3) Mécanisme limiteur de la vitesse rotatoire de la roue éolienne.

Il est constitué du mécanisme rotatoire expansible fixé à le axe de la roue éolienne en un trait intermédiaire entre la même roue éolienne et le plancher de l'appareil.

D'une bague fixée à l'axe se partent deux ou plusieurs hampes chacune desquelles soutient une sphère métallique. Ces hampes sont jointes à la bague moyennant des charnières. Pendant le mouvement rotatoire les sphères métalliques tendent à s'éloigner de l'axe central à cause de la force centrifuge. Les hampes, moyennant des trigles, sont obligées à élever une bague ayant la possibilité de tourner autour d'un tronçon de tube cylindrique coaxial avec celui de la roue éolienne; celà, grâce à son diamètre légèrement plus grand.

Le tronçon de tube cylindrique en outre a la possibilité de rouler autour de l'axe de la roue éolienne et de se deranger verticalement.

La bague susdite tourne mais elle non peut pas glisser verticalement; quand elle est obligée de s'élever pendant la rotation des hampes autour de l'axe central, elle est obligée en même temps de soulèver le tronçon de tube cylindrique sur lequel elle est montée.

Le tronçon cylindrique a à son extrémité supérieure un disque de friction et, à l'autre bout, une poulie. Soit l'un soit l'autre sont solidaires avec le tronçon de tube cylindrique. Les poids et les distances des sphères métalliques des charnières devrayent être réglés de façon que le disque de friction monté sur l'extrémité superieure du tronçon de tube cylindrique soit très près du disque de friction solidaire avec l'axe de la roue éolienne quand la vitesse de rotation du dernier alternateur a dejà atteint le maximum (ou presque) de vitesse.

Si la vitesse dépasse la valeur susdite a lieu l'embrayage et la poulie est obligée de rouler avec le tronçon de tube cylindrique en faisant enrouler un câble. Celui-ci agit comme frein à action graduée soulevant graduellement les poids attelés à son extrémité et reposants sur le plancher.

4) Un mécanisme pour le parfait engrènement de la couronne dentée avec les petites roues dentées des alternateurs.

L'epaisseur du bord de la couronne dentée est comprise presque exactement entre le petites roues dentées sous-jacentes et les paliers à roulement situés au-dessus. La distance entre les axes des petites roues dentées et ceux des paliers à roulement est invariable. De cette façon les ailes de la couronne dentée ne peuvent jamais perdre le contact avec les ailes des petites roues dentées si la même couronne dentée a quelques defauts de planéité. (Voir la figure en haut du dessin n° -1-).

Mais dans ce cas, comme il pourrait se produire de cosidérables résistances passives, on remedie à l'inconvénient au moyen de l'équilibrage des supports flottants sur lesquels sont assemblés les alternateurs et chaque accessoire. (Voir la figure en haut du dessin n° -1-).

# RAPPORT DE RECHERCHE EUROPEENNE

Office européen des brevets

Numero de la demande

EP 86 83 0004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| Y | US-A-4 508 972 (WILLMOUTH) <br> * Colonne 2, ligne 42 - colonne 3, ligne 26; colonne 7, ligne 67 - colonne 8, ligne 15 * | 1,2 | F 03 D 3/00 <br> F 03 D 9/00 |
| A | | 4 | |
| Y | FR-A-2 394 689 (COLLARD) <br> * Page 2, ligne 9 - page 3, ligne 13 * | 1,2 | |
| A | US-A-4 450 362 (GALLAGHER) <br> * Colonne 1, ligne 32 - colonne 2, ligne 65 * | 3 | |
| A | FR-A- 535 672 (MARCON) <br> * Page 1, ligne 54 - fin description * | 3 | DOMAINES TECHNIQUES RECHERCHES (Int. Cl.4) <br><br> F 03 D |
| A | US-A-4 342 539 (POTTER) <br> * Colonne 6, lignes 15-29; figure 2 * | 4 | |

Le présent rapport de recherche a été établi pour toutes les revendications

| Lieu de la recherche <br> LA HAYE | Date d'achèvement de la recherche <br> 10-09-1986 | Examinateur <br> DE WINTER P.E.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82